(19) Europäisches Patentamt
European Patent Office
Office européen des brevets

(11) **EP 4 333 098 A1**

(12) **EUROPEAN PATENT APPLICATION**
published in accordance with Art. 153(4) EPC

(43) Date of publication:
06.03.2024 Bulletin 2024/10

(51) International Patent Classification (IPC):
*H01M 4/13* (2010.01)          *H01M 4/62* (2006.01)
*H01M 10/052* (2010.01)          *H01M 4/139* (2010.01)

(52) Cooperative Patent Classification (CPC):
**H01M 4/13; H01M 4/139; H01M 4/62;**
**H01M 10/052;** Y02E 60/10

(21) Application number: 22846173.7

(22) Date of filing: 18.07.2022

(86) International application number:
**PCT/KR2022/010456**

(87) International publication number:
**WO 2023/003303 (26.01.2023 Gazette 2023/04)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 22.07.2021 KR 20210096481

(71) Applicant: **LG ENERGY SOLUTION, LTD.**
**Seoul 07335 (KR)**

(72) Inventors:
• **KIM, Myeongsoo**
**Daejeon 34122 (KR)**
• **KIM, Ki Tae**
**Daejeon 34122 (KR)**
• **KIM, Taegon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRODE FOR SECONDARY BATTERY AND SECONDARY BATTERY COMPRISING SAME**

(57) The present invention provides an electrode for a secondary battery, comprising a dry electrode film comprising an active material, an electrically conductive material, and a fibrillated binder; and a current collector on which the electrode film is stacked, wherein the electrically conductive material comprises carbon fibers, and a secondary battery comprising the same.

【Figure 1】

EP 4 333 098 A1

**Description**

[Technical Field]

This application claims the benefit of priority based on Korean Patent Application No. 10-2021-0096481 filed on July 22, 2021, all contents of which are incorporated herein by reference.
The present invention relates to an electrode for a secondary battery and a secondary battery comprising the same.

[Background Art]

Recently, there is increasing interest in energy storage technology. As the application area thereof extends to the energy for mobile phones, camcorders, notebook PCs, and even electric vehicles, the effort of research and development of electrochemical devices is being carried out more and more concretely.
Electrochemical devices are the most noteworthy area in this respect, and among them, the development of a secondary battery capable of charging/discharging is the focus of attention. Recently, in developing these secondary batteries, research and development on the design of new electrodes and batteries are being actively carried out in order to improve capacity density and specific energy.
Among secondary batteries that are currently put to practical use, lithium secondary batteries are in the spotlight because of their high operating voltage and significantly higher energy density compared to conventional batteries.
Meanwhile, along with the expansion or development of usage of secondary batteries, there is a continuous need for improvement in the electrode in terms of low resistance, high capacity, and improvement of mechanical properties and productivity.
The electrode for the secondary battery is generally manufactured by laminating an electrode active material layer, which is formed by binding an active material and an electrically conductive material used as necessary with a binder, on a current collector. Specifically, a method of applying a slurry containing an electrode active material, a binder, an electrically conductive material, etc. on a current collector and removing the solvent by heat or the like is generally used. However, the method described above has a disadvantage that the solvent must be removed from the slurry for the electrode, and thus economic feasibility and productivity are lowered.
Therefore, in order to improve this disadvantage, a method for manufacturing an electrode without using the slurry for the electrode has been proposed. That is, a technique for manufacturing an electrode film by mixing an active material, a binder, and an electrically conductive material without a liquid medium such as a solvent or a dispersion medium, and then passing the powder mixture through a rolling roll is being actively developed. Generally, binders called "fibrillizable binders" or "fibril-forming binders" are used in these methods. The binder makes it possible to produce a free-standing electrode film by binding the active material and the electrically conductive material while being fibrillated. The electrode film prepared in this way is used for manufacturing the electrode in a manner of stacking it on the current collector.
The conventional method as described above provides various advantages compared to the method of applying the slurry for the electrode. However, when the electrode is manufactured by the above method, the strength of the electrode film used as a free-standing film is not sufficiently maintained, which acts as a cause of lowering the productivity of the lamination process for the current collector. In particular, depending on the direction of development to reduce the amount of binder used in order to develop a battery exhibiting high capacity and high efficiency, the above problems are acting as a major obstacle to the development of secondary batteries.

[Prior Art Document]

Korean Laid-open Patent Publication No. 10-2006-0025230

[Disclosure]

[Technical Problem]

It is an object of the present invention to provide an electrode for a secondary battery including a dry free-standing electrode film having excellent strength and a secondary battery including the same, which has been devised to solve the above problems of the prior art.

[Technical Solution]

In order to achieve the above object, the present invention provides an electrode for a secondary battery, comprising a dry electrode film comprising an active material, an electrically conductive material, and a fibrillated binder; and a current collector on which the electrode film is laminated, wherein the electrically conductive material comprises carbon fibers.

In addition, the present invention provides a secondary battery comprising the electrode.

[Advantageous Effects]

The electrode for secondary battery of the present invention comprises a dry free-standing electrode film having excellent strength, and thus greatly reduces the defect rate caused by the lack of strength of the electrode film during the manufacture of the electrode, thereby providing the effect of remarkably improving the productivity in the manufacture of the electrode.

In addition, the present invention provides the effect of greatly improving the quality of the battery by improving the charging/discharging characteristics and lifetime characteristics of the battery according to the reduction of the defect rate as described above.

[Description of Drawings]

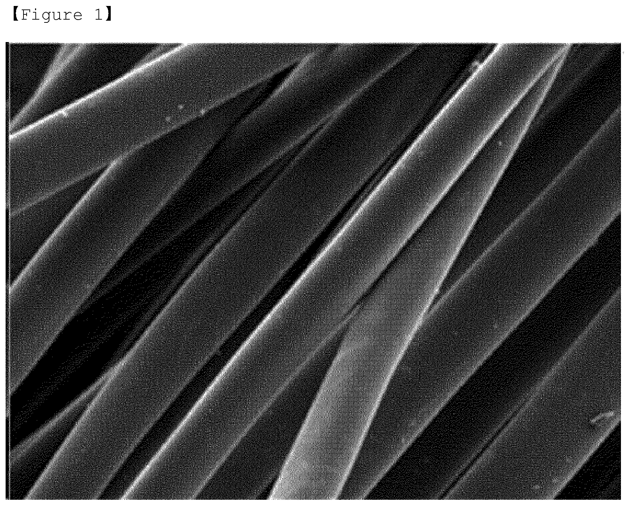

FIG. 1 is an image of carbon fibers contained in the electrode of the present invention.

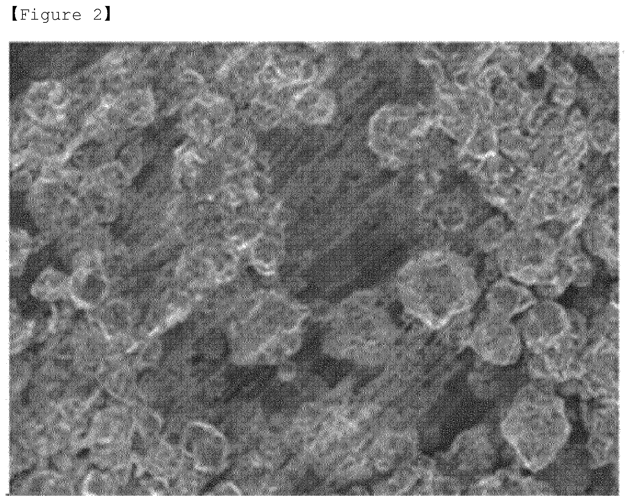

FIG. 2 is an image of the form of the fibrillated binder contained in the electrode of the present invention.

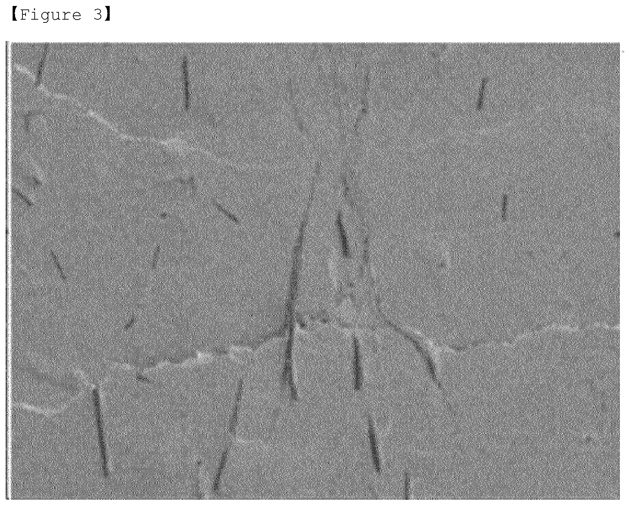

FIG. 3 is an image of the surface of the electrode of the present invention.

[Best Mode]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the present invention. The singular forms "a," "an," and "the" include plural referents unless the context clearly dictates otherwise.

It is to be understood that the terms "comprise", or "have", etc., as used in the present specification, are intended to designate the presence of implemented features, numbers, steps, components, parts or combinations thereof, but not to preclude the possibility of the presence or addition of one or more other features, numbers, steps, components, or combinations thereof.

The electrode for the secondary battery of the present invention comprises a dry electrode film comprising an active material, an electrically conductive material, and a fibrillated binder; and a current collector on which the electrode film is laminated, wherein the electrically conductive material comprises carbon fibers.

Various types of dry electrode film have been proposed in this field, but when the strength of the electrode film is not maintained, for example, since it is difficult to apply to secondary batteries through a roll to roll process, strength is a very important factor in electrode film.

The present invention is characterized in that the strength of the electrode film is improved by incorporating carbon fibers into the electrode film as an electrically conductive material.

In one embodiment of the present invention, preferably, the average diameter of the carbon fibers is equal to the average particle diameter of the active material particles or greater than the average particle diameter of the active material particles. If the average diameter of the carbon fibers is smaller than the average particle diameter of the active material particles, it is difficult to expect an improvement in strength by the carbon fibers. This is because, in the dry electrode film, if the diameter of the carbon fibers is smaller than the particle diameter of the active material, the carbon fibers are not firmly fixed between the particles of the active material. Conversely, if the diameter of the carbon fibers is larger than the particle diameter of the active material, the carbon fibers are firmly fixed in the dry electrode film, thereby greatly improving the strength of the dry electrode film.

In one embodiment of the present invention, the average diameter of the carbon fibers may be 1 to 10 times, preferably 1.1 to 5 times, and more preferably 1.2 to 2 times relative to the average particle diameter of the active material particles. If the average diameter of the carbon fiber is less than 1 time compared to the average particle diameter of the active material particles, the effect of improving the strength of the electrode film is not great. If the average diameter of the carbon fiber exceeds 10 times the average particle diameter of the active material particles, since the volume of the carbon fibers occupies most of the area of the electrode, the energy density is very low, and the uniformity of the electrode is also very poor, and thus it is undesirable.

In one embodiment of the present invention, the carbon fibers may have an average diameter of 0.05 gm to 100 gm, and the active material particles may have an average particle diameter of 0.01 gm to 20 gm.

In one embodiment of the present invention, the carbon fibers may be contained in an amount of 0.1 to 5% by weight based on the total weight of the electrode film. If the carbon fibers are contained in an amount of 0.1% by weight, it is difficult to expect the effect of improving the strength. If the carbon fibers exceed 5% by weight, since the energy density of the electrode is lowered, it is not preferable for manufacturing a battery having a high capacity.

In one embodiment of the present invention, the carbon fibers may have a length of 5 gm to 1500 gm, preferably 100 gm to 1000 gm, and more preferably 200 gm to 800 gm.

Hereinafter, the present invention will be described for each component.

### <Active material>

As the active material, all of the components commonly used for the positive electrode and the negative electrode may be used. Specifically, for example, if the active material is a positive electrode active material, it may be particles of any one active material selected from the group consisting of $LiCoO_2$, $LiNiO_2$, $LiMn_2O_4$, $LiCoPO_4$, $LiFePO_4$ and $LiNi1-x-y-zCoxM1yM2zO_2$ (wherein M1 and M2 are each independently any one selected from the group consisting of Al, Ni, Co, Fe, Mn, V, Cr, Ti, W, Ta, Mg and Mo, and x, y and z are, independently of each other, the atomic fractions of the elements of the oxide composition and $0 \leq x < 0.5$, $0 \leq y < 0.5$, $0 \leq z < 0.5$, $0 < x+y+z \leq 1$), or a mixture of two or more thereof.

In addition, if the electrode active material is a negative electrode active material, it may be any one active material selected from the group consisting of carbonaceous material such as natural graphite or artificial graphite (mesophase carbon microbeads(MCMB), pyrolytic carbon, liquid crystal pitch-based carbon fiber (mesophase pitch-based carbon fiber), liquid crystal pitches (mesophase pitches), petroleum or coal tar pitch derived cokes, etc.); lithium-containing titanium composite oxide (LTO), metals(Me) which are Si, Sn, Li, Zn, Mg, Cd, Ce, Ni or Fe; alloys composed of the above-described metals (Me); oxides of the above-described metals (Me) (MeOx, for example:SiO); and a composite of the above-described metals (Me) and carbon, or a mixture of two or more thereof.

The active material may be contained, for example, in an amount of 85 to 98% by weight based on the total weight of the electrode film.

### <Electrically conductive material>

In one embodiment of the present invention, an electrically conductive material other than the carbon fiber may be further comprised as the electrically conductive material. The electrically conductive material is not particularly limited as long as it has conductivity without causing chemical change in the secondary battery. For example, it may be at least one selected from the group consisting of carbon black such as carbon black, acetylene black, Ketjen black, channel black, furnace black, lamp black, thermal black, etc.; metal powders such as aluminum and nickel powder; electrically conductive whiskers such as zinc oxide and potassium titanate; electrically conductive metal oxides such as titanium oxide; polyphenylene derivatives.

The electrically conductive material may be contained, for example, in an amount of 1 to 10% by weight, specifically 2 to 5% by weight, based on the total weight of the electrode film.

The electrically conductive material other than the carbon fiber may be contained in an amount of 1 to 5% by weight based on the total weight of the electrode film.

### <Binder>

In one embodiment of the present invention, the fibrillated binder may comprise any one or more of polyvinylidene fluoride-hexafluoropropylene and polytetrafluoroethylene, and preferably may be polytetrafluoroethylene.

In addition, the electrode for the secondary battery of the present invention may further comprise a binder other than the binder described above. The other binder is a component that assists bonding between the active material and the electrically conductive materials or adhesion to the current collector, and may be used without limitation as long as it is a material that can be used for the electrode. Specifically, the binder may be a non-acrylic polymer or an acrylic polymer.

The acrylic polymer is not limited as long as it is a polymer in which at least one repeating unit of the binder polymer is derived from an acrylic monomer. The acrylic monomer may be an alkyl acrylate, an alkyl methacrylate, an isoalkyl (meth) acrylate, and in this case, "alkyl" may be an alkyl group having 1 to 10 carbon atoms, and more specifically, an alkyl group having 1 to 5 carbon atoms.

Specific examples of the acrylic monomer may comprise methyl (meth)acrylate, ethyl (meth)acrylate, propyl (meth)acrylate, butyl (meth)acrylate, and pentyl (meth)acrylate.

The acrylic polymer may be a homopolymer composed of one repeating unit derived from an acrylic monomer, a copolymer including repeating units derived from two or more acrylic monomers, or a mixture of two or more thereof.

In addition, the acrylic polymer may be a copolymer of at least one non-acrylic monomer and an acrylate monomer, such as at least one selected from the group consisting of acrylate-styrene-butadiene rubber, acrylate-acrylonitrile-styrene-butadiene rubber, methyl acrylate-styrene-butadiene rubber, methyl acrylate-acrylonitrile-styrene-butadiene rubber, ethyl acrylate-styrene-butadiene rubber, ethyl acrylate-acrylonitrile-styrene-butadiene rubber, propyl acrylate-styrene-butadiene rubber, propyl acrylate-acrylonitrile-styrene-butadiene rubber, butyl acrylate-styrene-butadiene rubber, and butyl acrylate-acrylonitrile-styrene-butadiene rubber. In the case of a copolymer of a non-acrylic monomer and an acrylate monomer, the weight% of the repeating unit derived from the acrylate monomer may be 5 to 45% by weight, specifically 5 to 35% by weight.

In addition, the acrylic polymer may be a mixture of two or more types of homoacrylic polymers, a mixture of two or more types of acrylic copolymers, or a mixture of copolymers of two or more types of non-acrylic monomers and acrylate monomers, and also, may be a mixture of two or more of a homoacrylic polymer, an acrylic copolymer, and a copolymer of a non-acrylic monomer and an acrylate monomer.

The non-acrylic polymer means a polymer comprising at least one repeating unit derived from a non-acrylic monomer, and specifically, may be a homopolymer composed of one type of repeating unit, a copolymer including two or more different types of repeating units, a mixture of two or more different types of homopolymers, or a mixture of two or more thereof.

Specific examples of the non-acrylic polymer may be one from the group consisting of styrene-butadiene rubber (SBR), a mixture of polystyrene and polybutadiene, polyvinylidene fluoride (PVDF), polyvinylidene fluoride-cohexafluoropropylene, polyvinylidene fluoride-cotrichloroethylene, polytetrafluoroethylene (PTFE), polyvinylpyrrolidone, polyethylene oxide, polyarylate, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, and carboxyl methyl cellulose (CMC) or a mixture of two or more thereof. Among them, polyvinylidene fluoride (PVDF), polyethylene oxide (PEO), etc. may be preferably used.

In one embodiment of the present invention, the total binder content including the fibrillated binder may be 0.01 to 5% by weight, specifically, 1 to 4% by weight based on the total weight of the electrode film. If the content of the binder satisfies this range, the adhesive strength between the electrode active material layer and the current collector can be improved, the resistance of the electrode can be reduced or the detachment of the electrode can be prevented even after the degradation of the cell by improving adhesive strength, and the migration of the binder to the surface of the electrode can be suppressed, and thus the ionic conductivity or electrical conductivity in the electrode can be improved.

**<Current collector>**

As the current collector, a known current collector used in secondary batteries may be used without limitation. For example, stainless steel, aluminum, nickel, titanium, carbon, copper; stainless steel surface-treated with carbon, nickel, titanium or silver; aluminum-cadmium alloy; a non-conductive polymer surface-treated with an electrically conductive material; a non-conductive polymer surface-treated with metal; a conductive polymer and the like may be used.

**<Manufacture of electrode>**

Hereinafter, a method of manufacturing the electrode for the secondary battery of the present invention will be described by way of example.

A method of manufacturing an electrode according to an embodiment of the present invention may comprise the steps of preparing a mixture by dry mixing an active material, an electrically conductive material, and a binder (primary mixing); applying a high shear force to the mixture (secondary mixing); preparing a free-standing film by pressing the secondary mixture; and placing the free-standing electrode film on a current collector and rolling them.

The high shear force may be 50N to 1000N. Here, since the active material, the electrically conductive material, and the binder are the same as those described above, descriptions thereof will be omitted.

The mixture may be prepared by dry mixing the active material, the electrically conductive material, and the binder. The dry mixing means mixing in the absence of a solvent. The dry mixing may be performed by mixing at 600 rpm to 20000 rpm, specifically, 1000 rpm to 12000 rpm, for 0.5 to 10 minutes at room temperature or lower using a stirring device.

The step of applying the high shear force may be performed before placing the mixture on the current collector.

The step of applying the high shear force may comprise applying a high shear force by shear compressing the mixture. Specifically, when using a device for applying a shear force, for example, PBV-0.1L (Irie Shokai company), the high shear force may be applied by shearing and compressing the mixture at 10 rpm to 100 rpm for 1 minute to 10 minutes. However, it is not necessarily limited to such a method.

When a high shear force is applied to the mixture, the active material, the binder, and the electrically conductive material in the mixture may be entangled with each other, and thus the electrically conductive material, the active material, and the binder may form aggregated particles (granule). Therefore, by the presence of the particles described above, the active material and the binder are supported by the electrically conductive material of carbon fibers, so that the bonding strength can be increased. Accordingly, the process of disposing the mixture on the current collector can be facilitated.

The high shear force may be 50N to 1000N, specifically 100N to 500N, and more specifically 100N to 300N. In the present invention, a high shear force in the above range may be applied to induce entanglement of carbon fibers or the like.

In the step of preparing the free-standing film, the pressurization may be performed using a Two roll mill MR-3 (Inoue company) or the like.

The step of rolling the current collector on which the free-standing film is located may be performed through a roll press method.

### <Manufacture of secondary battery>

In addition, the present invention relates to a secondary battery comprising a positive electrode, a negative electrode, and a separator interposed between the positive electrode and the negative electrode, wherein at least one of the positive electrode and negative electrode is the aforementioned electrode. When the electrode according to the present invention is used only as any one of the positive electrode and negative electrode, the other electrode may be any one of electrodes known in the art without limitation.

Hereinafter, the secondary battery will be described as an example. Specifically, a lithium secondary battery will be described as an example.

As the separator, a porous polymer film commonly used as a separator in a lithium secondary battery, for example, a porous polymer film made of a polyolefin-based polymer such as ethylene homopolymer, propylene homopolymer, ethylene/butene copolymer, ethylene/hexene copolymer, and ethylene/methacrylate copolymer may be used alone or may be laminated and used. In addition, an insulating thin film having high ion permeability and mechanical strength may be used. The separator may comprise a safety reinforced separator (SRS) having an organic/inorganic composite porous coating layer coated thinly by connecting and fixing inorganic particles to the surface of a separator substrate such as a porous polymer film through a binder polymer. In addition, a conventional porous nonwoven fabric, for example, a nonwoven fabric made of glass fiber having a high melting point, polyethylene terephthalate fiber, etc. may be used, and a form in which the porous coating layer of the above-described organic/inorganic composite is applied even on the porous nonwoven fabric is also possible, but is not limited thereto.

The lithium secondary battery of the present invention can be manufactured by accommodating the assembly of the positive electrode and the negative electrode in a battery case and injecting electrolyte.

The electrolyte may comprise a lithium salt and an organic solvent for dissolving it. The lithium salt may be used without limitation as long as it is commonly used in electrolytes for secondary batteries, and for example, the anion of the lithium salt may be at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The organic solvent comprised in the electrolyte may be used without limitation as long as it is used in this field, and representatively, may be at least one selected from the group consisting of propylene carbonate, ethylene carbonate, diethyl carbonate, dimethyl carbonate, ethylmethyl carbonate, methylpropyl carbonate, dipropyl carbonate, dimethyl sulfoxide, acetonitrile, dimethoxyethane, diethoxyethane, vinylene carbonate, sulfolane, gamma-butyrolactone, propylenesulfite and tetrahydrofuran.

In particular, among the carbonate-based organic solvents, ethylene carbonate and propylene carbonate, which are cyclic carbonates, are highly viscous organic solvents and have a high dielectric constant, so they can well dissociate lithium salts in the electrolyte, and thus can be used preferably. If a linear carbonate having a low viscosity and a low dielectric constant, such as dimethyl carbonate and diethyl carbonate, is mixed in an appropriate ratio with the cyclic carbonate, an electrolyte having a high electrical conductivity can be prepared, and thus can be used more preferably.

Optionally, the electrolyte stored according to the present invention may further comprise an additive such as an overcharging inhibitor comprised in a conventional electrolyte solution.

A known solid electrolyte may be used as the electrolyte.

The secondary battery according to an embodiment of the present invention may be a stack type, a wound type, a stack and fold type, or a cable type. In addition, the secondary battery may be used not only in a battery cell used as a power source for a small device, but also as a unit cell in a medium or large-sized battery module comprising a plurality of battery cells. Preferred examples of the medium or large-sized device may comprise electric vehicles, hybrid electric vehicles, plug-in hybrid electric vehicles, and power storage systems, and in particular, the secondary battery can be usefully used in hybrid electric vehicles and batteries for storing new and renewable energy, which are areas requiring high output.

With respect to the construction and manufacturing method of the secondary battery of the present invention, for parts not described above, the construction and manufacturing method known in the art may be applied without limitation.

Hereinafter, the present invention will be described in detail with reference to examples in order to specifically describe the present invention. However, the embodiments according to the present invention may be modified in various other forms, and the scope of the present invention should not be construed as being limited to the embodiments described below. Examples of the present invention are provided in order to more completely explain the present invention to those of ordinary skill in the art.

**Example 1: Manufacture of positive electrode**

96g of NCM powder (product name: GL80, LG Chem company), which is a particle of positive electrode active material with an average particle diameter of 10$\mu$m, 2g of Li250 (Denka company) as an electrically conductive material and 1 g of carbon fibers having a diameter of 12 $\mu$m and a length of 200 $\mu$m, and 2 g of PTFE as a binder were mixed at 5000 rpm for 1 minute without solvent using Lab Blender (Waring company) as a blender(first mixing). Next, high shear mixing was performed by applying a shear force of 250N to the mixture (PBV-0.1L, Irie Shokai company) (second mixing). Next, the secondary mixture in the form of dough was prepared as a free-standing film using a Two roll mill MR-3 (Inoue company). Thereafter, the free-standing film was placed on one side of an aluminum current collector having a thickness of 15 $\mu$m, and pressurized to prepare a positive electrode.

**Example 2: Manufacture of positive electrode**

A positive electrode was manufactured in the same way as in Example 1, except that in Example 1, NCM powder (brand name: GL80, LG Chem company), which is a particle of positive electrode active material with an average particle diameter of 10$\mu$m, and carbon fibers having a diameter of 15 $\mu$m and a length of 500 $\mu$m are used.

**Example 3: Manufacture of positive electrode**

A positive electrode was manufactured in the same way as in Example 1, except that in Example 1, NCM powder (brand name: GL80, LG Chem company), which is a particle of positive electrode active material with an average particle diameter of 10$\mu$m, and carbon fibers having a diameter of 20 $\mu$m and a length of 800 $\mu$m are used.

**Example 4: Manufacture of negative electrode**

A negative electrode was manufactured in the same manner as in Example 1, except that in Example 1, artificial graphite powder, which is a negative electrode active material with an average particle diameter of 7$\mu$m, is used instead of a positive electrode active material.

**Comparative Example 1: Manufacture of positive electrode**

A positive electrode was manufactured in the same way as in Example 1, except that in Example 1, NCM powder (brand name: GL80, LG Chem company), which is a particle of positive electrode active material with an average particle diameter of 10$\mu$m, and carbon fibers having a diameter of 5 $\mu$m and a length of 150 ym are used.

**Comparative Example 2: Manufacture of positive electrode**

A positive electrode was manufactured in the same way as in Example 1, except that in Example 1, NCM powder (brand name: GL80, LG Chem company), which is a particle of positive electrode active material with an average particle diameter of 10$\mu$m, and carbon fibers having a diameter of 8 $\mu$m and a length of 100 $\mu$m are used.

**Comparative Example 3: Manufacture of positive electrode**

A positive electrode was manufactured in the same way as in Example 1, except that in Example 1, NCM powder (brand name: GL80, LG Chem company), which is a particle of positive electrode active material with an average particle diameter of 5$\mu$m, and carbon fibers having a diameter of 56 $\mu$m and a length of 100 $\mu$m are used.

**Experimental Example 1: Determination of the strength of free-standing electrode**

The strength of the free-standing films prepared in Examples 1 to 4 and the free-standing films prepared in Comparative Examples 1 to 3 was measured by sampling electrodes with a width of 20 mm, a length of 200 mm, and a thickness of 200 $\mu$m and measuring the strength by using a UTM equipment from Instron company under the condition of 500 mm/min by a 180 degree peel measurement method.
At the time of the measurement, the maximum value of the force applied up to the time point at which cracks did not occur on the film was evaluated as the strength of the free-standing film, and the measurement results are shown in Table 1 below.

Table 1:

|  | Strength (kgf/cm$^2$) |
|---|---|
| Example 1 free-standing electrode | 34 |
| Example 2 free-standing electrode | 38 |
| Example 3 free-standing electrode | 45 |
| Example 4 free-standing electrode | 31 |
| Comparative Example 1 free-standing electrode | 20 |
| Comparative Example 2 free-standing electrode | 18 |
| Comparative Example 3 free-standing electrode | 44 |

**Example 5 and Comparative Example 3: Manufacture of lithium secondary battery**

Batteries of Example 5, Comparative Example 4, and Comparative Example 5 were prepared using the positive electrodes prepared in Example 1, Comparative Example 1, and Comparative Example 3, respectively. A specific manufacturing method is as follows.

(1) Manufacture of negative electrode

Natural graphite as a negative electrode active material, carbon black which is an electrically conductive material, and a PVdF binder were mixed in an N-methylpyrrolidone solvent in a weight ratio of 85:10:5 to prepare a composition for forming a negative electrode, and the composition was applied to a copper current collector to prepare a negative electrode.

(2) Manufacture of lithium secondary battery

A separator of porous polyethylene was interposed between each positive electrode prepared in Example 1, Comparative Example1, and Comparative Example 3, and the negative electrode prepared in (1) above to manufacture an electrode assembly, and the electrode assembly was placed inside the case, and then, the electrolyte was injected into the case to manufacture a lithium secondary battery. At this time, the electrolyte solution was prepared by dissolving lithium hexafluorophosphate (LiPF$_6$) at a concentration of 1.0M in an organic solvent consisting of ethylene carbonate/dimethyl carbonate/ethylmethyl carbonate (mixed volume ratio of EC/DMC/EMC = 3/4/3). Through this, lithium secondary batteries of Example 5, Comparative Example 4 and Comparative Example 5 were manufactured.

**Experimental Example 2: Evaluation of initial discharging efficiency and capacity retention rate of lithium secondary battery**

The secondary batteries of Example 5, Comparative Example 4, and Comparative Example 5 were charged and discharged to evaluate the initial discharging efficiency and capacity retention rate, and the results are shown in Table 2 below. Cycles 1 and 2 were charged and discharged at 0.1C, and from cycle 3 to cycle 49, charging and discharging were performed at 0.33C. Cycle 50 ended in the charged state (lithium is in the negative electrode).

Charging conditions: CC (constant current)/CV (constant voltage)(4.25V/0.05C current cut-off)
Discharging condition: CC (constant current) condition 3.0V

The initial discharging efficiency and capacity retention rate were respectively derived by the following calculations.

```
    Initial discharging efficiency (%) = (discharging

capacity at first cycle / charging capacity at first cycle)

    X100

    Capacity retention rate (%) = (discharging capacity at

cycle 49 / discharging capacity at first cycle) X100
```

Table 2:

|  | Initial discharging efficiency (%) | Capacity retention rate **(%)** |
|---|---|---|
| Example 5 Lithium secondary battery | 99.7 | 92 |
| Comparative Example 4 lithium secondary battery | 99.4 | 90 |
| Comparative Example 5 lithium secondary battery | 99.4 | 76 |

**Claims**

1. An electrode for a secondary battery, comprising:

   a dry electrode film comprising an active material, an electrically conductive material, and a fibrillated binder; and a current collector on which the electrode film is stacked,
   wherein the electrically conductive material comprises carbon fibers.

2. The electrode for the secondary battery according to claim 1, wherein the average diameter of the carbon fibers is equal to or greater than an average particle diameter of active material particles.

3. The electrode for the secondary battery according to claim 2, wherein the average diameter of the carbon fibers is 1 to 10 times the average particle diameter of the active material particles.

4. The electrode for the secondary battery according to claim 3, wherein the average diameter of the carbon fibers is 0.05 $\mu m$ to 100 $\mu$m, and the average particle diameter of the active material particles is 0.01 $\mu m$ to 20 $\mu$m.

5. The electrode for the secondary battery according to claim 2, wherein the carbon fibers are contained in an amount of 0.1 to 5% by weight based on a total weight of the electrode film.

6. The electrode for the secondary battery according to claim 5, wherein the electrically conductive material further comprises an electrically conductive material other than the carbon fibers in an amount of 1 to 5% by weight based on the total weight of the electrode film.

7. The electrode for the secondary battery according to claim 2, wherein the carbon fibers have a length of 5 $\mu$m to 1500 $\mu$m.

8. The electrode for the secondary battery according to claim 1, wherein the fibrillated binder comprises at least one of polyvinylidene fluoride-hexafluoropropylene and polytetrafluoroethylene.

9. A secondary battery comprising the electrode of claim 1.

10. The secondary battery according to claim 9, wherein the secondary battery is a lithium secondary battery.

【Figure 1】

【Figure 2】

【Figure 3】

<div style="text-align:center">**INTERNATIONAL SEARCH REPORT**</div>

| International application No. |
|---|
| **PCT/KR2022/010456** |

**A.    CLASSIFICATION OF SUBJECT MATTER**

**H01M 4/13**(2010.01)i; **H01M 4/62**(2006.01)i; **H01M 10/052**(2010.01)i; **H01M 4/139**(2010.01)i

According to International Patent Classification (IPC) or to both national classification and IPC

**B.    FIELDS SEARCHED**

Minimum documentation searched (classification system followed by classification symbols)

H01M 4/13(2010.01); B05D 3/12(2006.01); B05D 5/12(2006.01); H01M 10/04(2006.01); H01M 10/052(2010.01); H01M 10/0525(2010.01); H01M 4/139(2010.01); H01M 4/1393(2010.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지 (secondary battery), 피브릴화 (fibrillation), 바인더 (binder), 카본 탄소 (carbon fiber), 자립형 (free standing), 무용매 (solvent-free)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2014-0136952 A (FRAUNHOFER-GESELLSCHAFT ZUR FOERDERUNG DER ANGEWANDTEN FORSCHUNG E.V.) 01 December 2014 (2014-12-01)<br>See abstract; paragraphs [0013], [0017], [0020], [0026], [0055] and [0086]-[0093]; and claim 11. | 1-10 |
| X | KR 10-2018-0121411 A (LG CHEM, LTD.) 07 November 2018 (2018-11-07)<br>See abstract; paragraphs [0026], [0028]-[0029], [0033], [0036]-[0037] and [0060]; and claims 1-15. | 1-10 |
| A | KR 10-2014-0131115 A (JENAX INC.) 12 November 2014 (2014-11-12)<br>See entire document. | 1-10 |
| A | KR 10-2020-0138263 A (MAXWELL TECHNOLOGIES, INC.) 09 December 2020 (2020-12-09)<br>See entire document. | 1-10 |
| A | KR 10-2006-0025230 A (MAXWELL TECHNOLOGIES, INC.) 20 March 2006 (2006-03-20)<br>See entire document. | 1-10 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
|---|---|
| **24 October 2022** | **24 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2022/010456** |

| Patent document cited in search report | | | Publication date (day/month/year) | Patent family member(s) | | | Publication date (day/month/year) |
| --- | --- | --- | --- | --- | --- | --- | --- |
| KR | 10-2014-0136952 | A | 01 December 2014 | CN | 104170125 | A | 26 November 2014 |
| | | | | DE | 102012203019 | A1 | 29 August 2013 |
| | | | | EP | 2820699 | A1 | 07 January 2015 |
| | | | | EP | 2820699 | B1 | 10 January 2018 |
| | | | | ES | 2663898 | T3 | 17 April 2018 |
| | | | | JP | 2015-508220 | A | 16 March 2015 |
| | | | | JP | 6078562 | B2 | 08 February 2017 |
| | | | | KR | 10-1778355 | B1 | 13 September 2017 |
| | | | | US | 10062900 | B2 | 28 August 2018 |
| | | | | US | 2015-0061176 | A1 | 05 March 2015 |
| | | | | WO | 2013-127684 | A1 | 06 September 2013 |
| KR | 10-2018-0121411 | A | 07 November 2018 | CN | 110546787 | A | 06 December 2019 |
| | | | | CN | 110546787 | B | 19 August 2022 |
| | | | | EP | 3609000 | A1 | 12 February 2020 |
| | | | | KR | 10-2268081 | B1 | 23 June 2021 |
| | | | | US | 11380899 | B2 | 05 July 2022 |
| | | | | US | 2020-0044257 | A1 | 06 February 2020 |
| | | | | WO | 2018-199702 | A1 | 01 November 2018 |
| KR | 10-2014-0131115 | A | 12 November 2014 | CN | 105340114 | A | 17 February 2016 |
| | | | | CN | 105340114 | B | 02 August 2019 |
| | | | | EP | 2975681 | A1 | 20 January 2016 |
| | | | | EP | 2975681 | B1 | 06 June 2018 |
| | | | | ES | 2686339 | T3 | 17 October 2018 |
| | | | | JP | 2016-519399 | A | 30 June 2016 |
| | | | | JP | 6188914 | B2 | 30 August 2017 |
| | | | | KR | 10-1516225 | B1 | 04 May 2015 |
| | | | | US | 2016-0049662 | A1 | 18 February 2016 |
| | | | | US | 9935316 | B2 | 03 April 2018 |
| | | | | WO | 2014-178646 | A1 | 06 November 2014 |
| KR | 10-2020-0138263 | A | 09 December 2020 | CN | 111919315 | A | 10 November 2020 |
| | | | | EP | 3776696 | A1 | 17 February 2021 |
| | | | | JP | 2021-519495 | A | 10 August 2021 |
| | | | | US | 2019-305316 | A1 | 03 October 2019 |
| | | | | WO | 2019-191397 | A1 | 03 October 2019 |
| KR | 10-2006-0025230 | A | 20 March 2006 | CN | 101194384 | A | 04 June 2008 |
| | | | | CN | 102569719 | A | 11 July 2012 |
| | | | | CN | 102569719 | B | 05 April 2017 |
| | | | | CN | 1838999 | A | 27 September 2006 |
| | | | | CN | 1838999 | B | 18 April 2012 |
| | | | | EP | 1644136 | A2 | 12 April 2006 |
| | | | | EP | 1644136 | B1 | 29 August 2018 |
| | | | | EP | 1644136 | B8 | 03 April 2019 |
| | | | | EP | 1766706 | A1 | 28 March 2007 |
| | | | | EP | 1766706 | B1 | 14 November 2018 |
| | | | | EP | 1882277 | A1 | 30 January 2008 |
| | | | | EP | 2357043 | A2 | 17 August 2011 |
| | | | | EP | 2357043 | A3 | 05 October 2011 |
| | | | | EP | 2357044 | A2 | 17 August 2011 |
| | | | | EP | 2357044 | A3 | 05 October 2011 |
| | | | | EP | 2357045 | A2 | 17 August 2011 |

Form PCT/ISA/210 (patent family annex) (July 2022)

INTERNATIONAL SEARCH REPORT
Information on patent family members

International application No.

**PCT/KR2022/010456**

| Patent document cited in search report | Publication date (day/month/year) | Patent family member(s) | | | Publication date (day/month/year) |
|---|---|---|---|---|---|
| | | EP | 2357045 | A3 | 05 October 2011 |
| | | EP | 2357046 | A2 | 17 August 2011 |
| | | EP | 2357046 | A3 | 05 October 2011 |
| | | EP | 2357046 | B1 | 04 December 2013 |
| | | EP | 3467918 | A1 | 10 April 2019 |
| | | EP | 3498385 | A1 | 19 June 2019 |
| | | EP | 3498385 | B1 | 07 April 2021 |
| | | EP | 3863079 | A1 | 11 August 2021 |
| | | ES | 2699850 | T3 | 13 February 2019 |
| | | ES | 2705475 | T3 | 25 March 2019 |
| | | ES | 2879335 | T3 | 22 November 2021 |
| | | JP | 2007-531245 | A | 01 November 2007 |
| | | JP | 2008-541339 | A | 20 November 2008 |
| | | JP | 2011-109115 | A | 02 June 2011 |
| | | JP | 4772673 | B2 | 14 September 2011 |
| | | KR | 10-1211968 | B1 | 13 December 2012 |
| | | KR | 10-2008-0005584 | A | 14 January 2008 |
| | | US | 10547057 | B2 | 28 January 2020 |
| | | US | 2005-0057888 | A1 | 17 March 2005 |
| | | US | 2005-0186473 | A1 | 25 August 2005 |
| | | US | 2005-0250011 | A1 | 10 November 2005 |
| | | US | 2005-0266298 | A1 | 01 December 2005 |
| | | US | 2005-0271798 | A1 | 08 December 2005 |
| | | US | 2006-0109608 | A1 | 25 May 2006 |
| | | US | 2006-0114643 | A1 | 01 June 2006 |
| | | US | 2006-0133012 | A1 | 22 June 2006 |
| | | US | 2006-0133013 | A1 | 22 June 2006 |
| | | US | 2006-0137158 | A1 | 29 June 2006 |
| | | US | 2006-0143884 | A1 | 06 July 2006 |
| | | US | 2006-0146475 | A1 | 06 July 2006 |
| | | US | 2006-0146479 | A1 | 06 July 2006 |
| | | US | 2006-0147712 | A1 | 06 July 2006 |
| | | US | 2006-0148112 | A1 | 06 July 2006 |
| | | US | 2006-0148191 | A1 | 06 July 2006 |
| | | US | 2006-0246343 | A1 | 02 November 2006 |
| | | US | 2007-0026317 | A1 | 01 February 2007 |
| | | US | 2007-0122698 | A1 | 31 May 2007 |
| | | US | 2007-0190424 | A1 | 16 August 2007 |
| | | US | 2008-0016664 | A1 | 24 January 2008 |
| | | US | 2008-0092808 | A1 | 24 April 2008 |
| | | US | 2008-0102371 | A1 | 01 May 2008 |
| | | US | 2008-0117564 | A1 | 22 May 2008 |
| | | US | 2008-0117565 | A1 | 22 May 2008 |
| | | US | 2008-0206446 | A1 | 28 August 2008 |
| | | US | 2008-0236742 | A1 | 02 October 2008 |
| | | US | 2008-0266753 | A1 | 30 October 2008 |
| | | US | 2009-0223630 | A1 | 10 September 2009 |
| | | US | 2009-0239127 | A1 | 24 September 2009 |
| | | US | 2009-0290288 | A1 | 26 November 2009 |
| | | US | 2010-0014215 | A1 | 21 January 2010 |

Form PCT/ISA/210 (patent family annex) (July 2022)

International application No.

**PCT/KR2022/010456**

| Patent document cited in search report | Publication date (day/month/year) | Patent family member(s) | | | Publication date (day/month/year) |
|---|---|---|---|---|---|
| | | US | 2010-0033901 | A1 | 11 February 2010 |
| | | US | 2010-0119699 | A1 | 13 May 2010 |
| | | US | 2010-0263910 | A1 | 21 October 2010 |
| | | US | 2011-0114896 | A1 | 19 May 2011 |
| | | US | 2011-0165318 | A9 | 07 July 2011 |
| | | US | 2011-0299219 | A1 | 08 December 2011 |
| | | US | 2012-0040243 | A1 | 16 February 2012 |
| | | US | 2013-0157141 | A1 | 20 June 2013 |
| | | US | 2015-0072234 | A1 | 12 March 2015 |
| | | US | 2017-0098826 | A1 | 06 April 2017 |
| | | US | 2020-0152987 | A1 | 14 May 2020 |
| | | US | 7090946 | B2 | 15 August 2006 |
| | | US | 7102877 | B2 | 05 September 2006 |
| | | US | 7227737 | B2 | 05 June 2007 |
| | | US | 7295423 | B1 | 13 November 2007 |
| | | US | 7342770 | B2 | 11 March 2008 |
| | | US | 7352558 | B2 | 01 April 2008 |
| | | US | 7384433 | B2 | 10 June 2008 |
| | | US | 7492571 | B2 | 17 February 2009 |
| | | US | 7495349 | B2 | 24 February 2009 |
| | | US | 7508651 | B2 | 24 March 2009 |
| | | US | 7722686 | B2 | 25 May 2010 |
| | | US | 7791860 | B2 | 07 September 2010 |
| | | US | 7791861 | B2 | 07 September 2010 |
| | | US | 7851238 | B2 | 14 December 2010 |
| | | US | 7883553 | B2 | 08 February 2011 |
| | | US | 7920371 | B2 | 05 April 2011 |
| | | US | 7935155 | B2 | 03 May 2011 |
| | | US | 8072734 | B2 | 06 December 2011 |
| | | US | 8213156 | B2 | 03 July 2012 |
| | | US | 8815443 | B2 | 26 August 2014 |
| | | US | 9525168 | B2 | 20 December 2016 |
| | | WO | 2005-008807 | A2 | 27 January 2005 |
| | | WO | 2005-008807 | A3 | 09 June 2005 |
| | | WO | 2006-001847 | A1 | 05 January 2006 |
| | | WO | 2006-135495 | A1 | 21 December 2006 |

Form PCT/ISA/210 (patent family annex) (July 2022)

**EP 4 333 098 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210096481
- KR 1020060025230